# EUROPEAN PATENT SPECIFICATION

(11) **EP 0 675 590 B1**
(45) Date of publication and mention of the grant of the patent: **29.04.1998**
(21) Application number: 95102383.7
(22) Date of filing: 21.02.1995
(51) Int. Cl.: H02P 6/00

(54) **Electronically commutated motor**
Elektronisch kommutierter Motor
Moteur de commutation électronique

(30) Priority: 30.03.1994 IT PN940019
(43) Date of publication of application: 04.10.1995
(73) Proprietor: SOLE S.p.A., I-33170 Pordenone (IT)
(72) Inventor: Kopac, Liubomir, I-33170 Pordenone (IT)
(74) Representative: Busca, Luciano

(56) References cited:
- EP-A- 0 323 860
- US-A- 4 943 747
- US-A- 5 070 264

## Description

The present invention refers to an electronically commutated electric motor, such as one capable for instance of driving centrifugal pumps, blowers, suction fans, compressors and the like, in particular for household appliances.

Electronic commutation of the windings of an electric motor, in particular such a motor with permanent-magnet rotor, is largely known to substantially involve two kinds of systems that differ from each other for the type and form of the supply voltage, ie.:
A) systems based on transistor switches requiring a direct voltage supply, known as "brushless DC" or "BLDC" systems. A commutation system of this kind is described for instance in US-A-4 005 347;
B) systems in which, for the electronic commutation, use is made of bidirectional semiconductor switches (such as Triacs, for instance) supplied with an alternating voltage, which are defined as "brushless AC" or "BLAC" systems herein. An electronic commutation system of this kind is for instance described in US-A-4 780 652.

In all of the above cited systems, the inductance of the stator windings brings about a current delay with respect to the commutation rate, and this causes the resulting torque and, therefore, the motor efficiency to suffer a reduction, particularly at the highest motor RPMs. In BLAC systems, in particular, a further current delay is brought about by the impossibility for the bidirectional switches to cut off the current right at the desired moment. This is of course appreciated to increase the above mentioned practical drawbacks.

In order to be able to perform its electronic commutation in a correct manner, the system requires an information concerning the angular position of the rotor. To this purpose, it is a common practice to make use of systems that detect the absolute position of the rotor by means of appropriate magnetic (Hall-effect) or optoelectronic position sensors, devices to measure the inductance or the voltage induced in the stator windings. In particular, state-of-art techniques used to compensate for the current delay refer solely to BLOC systems and can be summarized as follows:
1) Feedback current control and use of elevated supply voltage in view of reducing current delays in commutation transients.
2) Measurement of the rotor position through the use of a high-resolution absolute-position sensor, and the variation of the commutation instants depending on the RPM and direction of rotation of the rotor, in order to compensate for the current delay by advancing the commutation.
3) Orientation of the absolute-position sensor at an angle differing from the neutral position (symmetric position with respect to both directions of rotation), thereby achieving a fixed advance of the commutation.

It is commonly known that the solutions described under 1) and 2) above require the use of such sophisticated and expensive component parts as to make their application in such consumer products as home appliances practically impossibile.

The solution described under 3) above is only effective at a pre-determined RPM and in a single direction of rotation of the rotor, so that its application appears to be quite limited. Furthermore, such a solution is not applicable to single-phase motors, in which a displacement of the position sensor with respect to the neutral position can give rise to an erroneous commutation during motor starting, with the resulting occurrence of a stalled-rotor condition.

It should be further considered that, in single-phase motors, a stalled-rotor condition may also be brought about by errors in the measurement of the position, so that it is absolutely necessary that such errors be kept within certain limits. In any case, a single-phase motor with a position sensor in correspondence of the neutral angle is able to only ensure starting in a single direction of rotation, as pre-defined by the asymmetry of the magnetic gap.

From US-A-5 070 264 it is also known a brushless DC motor with a permanent magnetic rotor surrounded by stator windings spaced from the rotor by an air gap. To drive the stator windings, two coils with a magnetic core through which alternating current is passed are installed in the stator-rotor air gap and are 90° offset to each other, and the rotor comprises in the axial segment opposite the coils a magnetic portion and a nonmagnetic portion. This generates a change in the voltage drop at the coil during each rotor revolution. This solution substantially suffers from the same drawbacks as the known solutions referred to above, in that the coils form a traditional absolute position sensor and accordingly must be supplied with current to operate. In addition, the coils and the rotor are rather complicated in their construction and the whole motor is correspondingly undesirably complicated, unreliable and expensive.

It is therefore a main purpose of the present invention to provide an electronically commutated motor which is simple, cost-effective and reliable, so as to be able to be used also in such consumer products as household appliances and the like.

It is a further purpose of the present invention to provide a motor of the above specified kind, the operation of which can effectively be controlled in both directions of rotation.

According to the invention, such aims are reached in an electronically commutated motor embodying the characteristics recited in the appended claims.

Characteristics and advantages of the present invention will become more apparent from the following description which is given by way of non-limiting example with reference to the accompanying drawings, in which:
- Figure 1 is the simplified schematic circuit diagram of an electronically commutated single-phase motor according to a preferred embodiment of the present invention;
- Figure 2 is a diagram showing the curves relating to the main electrical operating characteristics of the motor according to Figure 1, in both directions of rotation;
- Figure 3 is a view of a variant of the motor according to Figure 1, provided in the form of a single-phase BLAC motor;
- Figure 4 is a view of a further variant of the motor according to Figure 1, provided in the form of a single-phase BLDC motor;

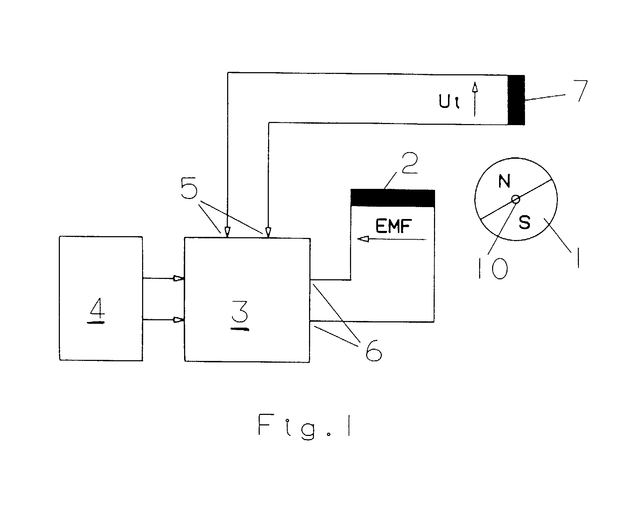

Referring now to Figure 1, the motor can be noticed to mainly comprise a permanent-magnet rotor 1 with two or more poles, and a wound stator with at least a stator winding 2 with two or more poles. The stator 2 is arranged to be supplied by an electronic commutation circuit 3 which is in turn connected to a power supply source 4.

The electronic commutation circuit 3 is of a type that is largely known to those skilled in the art. Mainly it comprises a driving input 5 adapted to receive (as it will be described farther on) a signal which is representative of the angular position of the rotor 1, as well as a power stage comprising electronic switches (transistors or Triacs) and having an output 6 adapted to supply the stator winding 2. The direction of the current flowing in the stator winding 2 determines the direction of the torque applied to the rotor 1; such a current, and in particular its polarity, is varied periodically by the electronic commutation circuit 3, in accordance with the position signal received at its driving input 5, so as to generate a deflecting torque in the pre-established direction at the rotor 1.

The driving input 5 of the electronic commutation circuit 3 is connected to a position sensor which, according to the invention, comprises a simple inductive winding 7 which is magnetically coupled to the rotor 1 and is substantially arranged at 90 electrical degrees with respect to the stator winding 2. As it will become more apparent from the description given farther on, such a 90° phase shift enables the position sensor 7 to be substantially free from disturbances induced by the stator winding 2, as well as to operate in a symmetrically similar manner in both directions of rotation of the motor.

It should be noticed that the electric motor may alternatively be of the variable reluctance type, in which case it would therefore include a rotor 1 of a ferromagnetic material. In any case, an auxiliary permanent-magnet rotor (not shown in the Figure for greater simplicity) can be shrink-fitted on to the rotation axis 10 of the rotor, so that the inductive sensor 7 is magnetically coupled with the rotor 1 of the motor in an indirect manner through said auxiliary permanent-magnet rotor. The latter will furthermore be arranged outside the magnetic field of the stator.

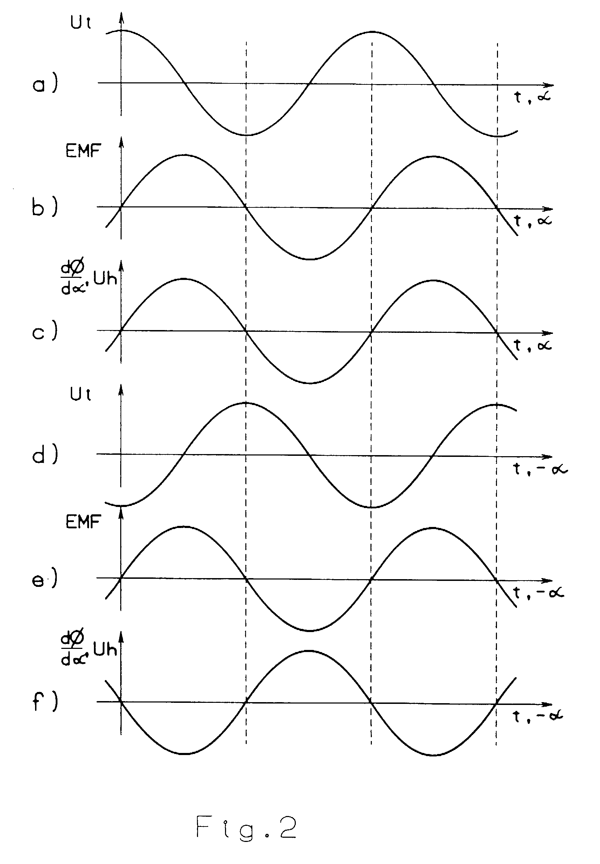

The operation of the motor according to the present invention is as described below with reference to Figure 2.

When the rotor 1 is caused to rotate, for instance in the anti-clockwise direction, an alternating voltage Ui (Figure 2a) is induced in the position sensor 7, said voltage being proportional in its amplitude to the RPM of the rotor 1 and acting as the driving signal applied to the driving input 5 of the electronic commutation circuit 3. In a *per sè* known way, the frequency and the phase of the signal Ui depend on the rotation speed and the instant position a of the rotor 1, respectively. As a consequence, the polarity of the voltage Ui depends on the instant position α and the direction of rotation of the rotor 1. If, for instance, the rotor rotates in the clockwise direction, the voltage Ui induced in the position sensor 7 will show a curve having a pattern as indicated in Figure 2d.

Since the position sensor 7 is arranged at 90 electrical degrees with respect to the stator winding 2, as already pointed out before, in both directions of rotation the voltage Ui will be out of phase by 90° with respect to the voltage EMF induced in the stator winding 2. Therefore, as it can be noticed in Figure 2, the voltage Ui will always be 90° in advance of the variation dø/dα of the rotor flux linkage ø in the stator winding 2, according to the angular position α of the rotor 1. In particular, the above mentioned variation dø/dα is shown in the Figures 2c and 2f which are referred to the motor rotating anti-clockwise and clockwise, respectively.

Conclusively it can be said that, in the motor according to the present invention, the signal Ui generated by the inductive position sensor 7 is particularly suitable to drive the input 5 of the electronic commutation circuit 3. In both possible directions of rotation of the motor, in fact, the signal Ui supplies in advance the electronic commutation circuit 3 with an information concerning the polarity of the current to be commutated in the stator winding, in a *per sè* known manner, so as to obtain a moment of torque in the desired direction. In an advantageous way, such an advance brings about an automatic compensation of the current delay due to the inductive nature of the stator winding, with the result that a correct and effective torque is in each moment and case applied to the rotor 1.

It will of course be appreciated that, if the driving signal Ui is desired to occur with a shorter advance, or an advance which is adjustable in accordance with the RPM, the possibility exists of providing a delay circuit of a *per sè* known type, which is adapted to establish a fixed delay or a delay which is variable with the frequency, respectively.

It will also be appreciated that the motor may include several stator windings, each one of them driven by a respective electronic commutation circuit 3. In such a case, to the driving input 5 of each electronic commutation circuit 3 there will be connected a respective inductive sensor 7 which is oriented at 90 electrical degrees with respect to the associated stator winding 2.

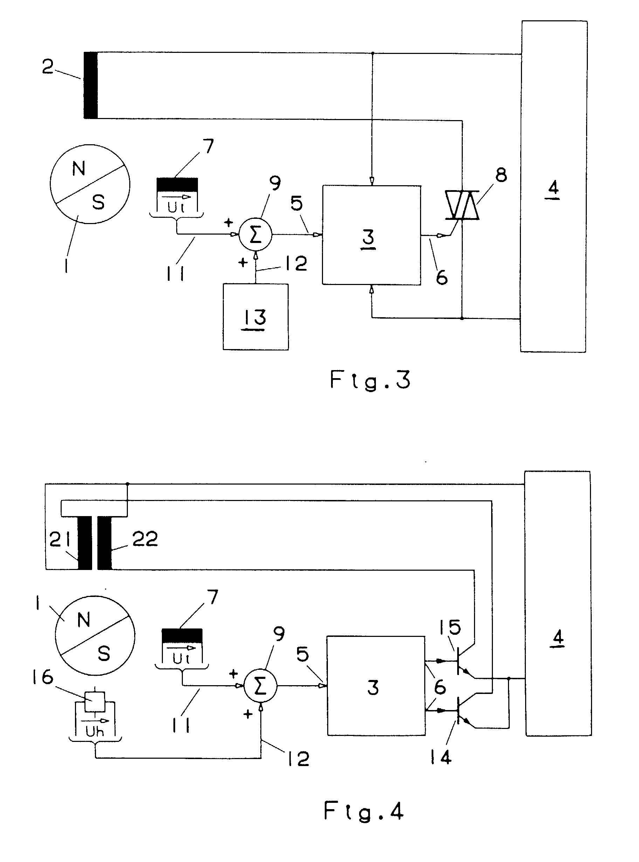

With reference to Figure 3, an embodiment of the present invention is described now, which is capable of ensuring in a simple manner an effective starting of the motor even in the presence of disturbances induced in the position sensor and in the presence of imperfections in the electronic circuit.

Merely by way of example, the commutation system for the motor 1, 2 shown in Figure 3 is of the so-called "BLAC" type, with an alternating-current power supply source 4 adapted to supply the stator winding 2 with current through a bidirectional switch 8 controlled by the electronic commutation circuit 3, the latter being in turn supplied by the power supply source 4.

The driving input 5 of the electronic commutation circuit 3 is connected to a corresponding output of an adder 9. The latter has a first input 11 adapted to receive (as this is schematically shown in Figure 3) the driving signal generated by the inductive sensor 7, as well as a second input 12 to which an alternating signal produced by an auxiliary generator 13 is applied. Such an alternating signal will be appropriately selected by anyone skilled in the art with an amplitude which is adequately reduced, but in any case greater than the amplitude of possible disturbances or errors that may be present in the system.

During motor starting, as well as at low motor RPMs, the signal Ui induced in the inductive sensor 7 will have a smaller amplitude than the direct-voltage errors and disturbances that are present in the input circuit. The signal produced by the generator 13 will on the contrary be prevailing on such errors and disturbances and will impart such a vibratory motion to the motor 1, 2 as is sufficient for the rotor 1 to induce in the sensor 7 a signal Ui with a useful amplitude. To this aim, of course, the signal produced by the generator 13 will be most effective when its frequency is close to the natural frequency of the electromechanical system of the motor and the driven load. In any case, the influence of such a signal at the working RPM of the motor will be substantially negligible, as this has already been emphasized before, so as to enable the whole system to operate in accordance with the signal Ui induced in the sensor 7 in the afore described manner.

The use of the auxiliary generator 13 is of particular importance, since it allows for a bidirectional operation even in single-phase motors which on the contrary are normally able to rotate in a single pre-established direction only.

With reference to Figure 4, a further embodiment of the present invention will be described now, which is in particular arranged to supply a rotor position information with an advance that is proportional to the actual RPM of the motor.

Merely by way of example, the commutation system for the motor 1, 2 shown in Figure 4 is of the so-called "BLDC" type, with a stator comprising two opposite windings 21, 22 adapted to be supplied by a direct-voltage power supply source 4 through respective transistors 14, 15 driven by the electronic commutation circuit 13. The input 11 of the adder 9 is driven by the inductive position sensor 7, whereas its input 12 is driven by an absolute-position sensor 16 of a traditional type, for instance of the Hall-effect type. The sensor 16 is mounted in the neutral position, ie. in the symmetrical position in which the signal Uh generated with a constant amplitude by the same sensor is proportional to and in phase with the variation dφ/dα of the rotor flux linkage in the stator winding. In a *per sè* known manner, therefore, such a signal Uh can be represented by the curves shown in Figure 2c and 2f, respectively, in accordance with the direction of rotation of the motor.

By adding the signal Uh (having a constant amplitude) to the signal Ui (having an amplitude which is proportional to the motor RPM) in the adder 9, it is possible for the electronic commutation circuit 3 to be driven with a resulting signal containing an information on the position of the rotor 1 whose advance is in proportion with the actual RPM of the motor.

Conclusively, it can be said that the electronic commutation circuit 3 is in this way driven in an optimum manner through a signal which is able to compensate the current delays in a manner that is correlated to the motor RPM.

It will of course be appreciated that the afore described electronically commutated motor may be the subject of a number of modifications considered to be appropriate, without departing from the scope of the present invention. For instance, the above described embodiments of the present inventions may indifferently include either BLAC-type or BLDC-type systems, according to the particular needs.

Furthermore, as this has already been stressed before, the present invention is applicable also to electronically commutated motors comprising more than one winding.

## Claims

1. Electronically commutated motor comprising an either ferromagnetic or permanent-magnet rotor, as well as a wound stator comprising at least a stator winding supplied through an electronic commutation circuit in accordance with a driving signal generated by sensor means provided to detect the angular position of the rotor and comprising an inductive coil (7) that is magnetically coupled to the rotor (1), **characterized in that** said sensor means is arranged at substantially 90 electrical degrees with respect to the stator winding (2; 21, 22), so that said driving signal (Ui) is induced in the sensor (7) with a corresponding phase shift with respect to the voltage (EMF) induced in the stator winding.

2. Electronically commutated motor according to claim 1, **characterized in that** said inductive sensor (7) is magnetically coupled to the rotor of the motor in an indirect manner through an auxiliary permanent-magnet rotor which is fitted on to the rotation axis (10) of the rotor (1) and is located outside the stator magnetic field.

3. Electronically commutated motor according to claim 1, in which possible disturbance and/or error signals are generated, **characterized in that** said electronic commutation circuit (3) is driven by the sum of the driving signal (Ui) produced by the inductive sensor (7) and an alternating signal produced by an auxiliary generator (13) with an amplitude which is just slightly greater than the one of said disturbance and/or error signals.

4. Electronically commutated motor according to claim 3, **characterized in that** said alternating signal is produced by the auxiliary generator (13) with a frequency which is substantially equal to the natural frequency of the electromechanical system comprising the motor and a driven load associated therewith.

5. Electronically commutated motor according to claim 1, **characterized in that** said electronic commutation circuit (3) is driven by the sum of the driving signal (Ui) produced by the inductive sensor (7) and an alternating signal (Uh) produced with a constant amplitude by sensor means (16) provided to detect the absolute position of the rotor (1).

## Patentansprüche

1. Elektronisch kommutierter Motor umfassend sowohl einen entweder ferromagnetischen oder permanentmagnetischen Rotor als auch einen gewikkelten Stator, der mindestens eine Statorwicktung umfaßt, die durch eine elektronische Kommutationsschaltung entsprechend einem Antriebssignal versorgt wird, das durch eine Sensoreinrichtung erzeugt wird, die vorgesehen ist, um die Winkelposition des Rotorendes zu erfassen, das eine induktive Spule (7) aufweist, die magnetisch an den Rotor (1) gekoppelt ist, **dadurch gekennzeichnet,** daß die Sensoreinrichtung im wesentlichen 90 elektrische Grad hinsichtlich zu der Statorwicklung (2; 21, 22) angeordnet ist, so daß das Antriebssignal (Ui) in dem Sensor (7) mit einer korrespondierenden Phasenverschiebung hinsichtlich der Spannung (EMF) induziert wird, die in die Statorwicklung induziert wird.

2. Elektronisch kommutierter Motor nach Anspruch 1, **dadurch gekennzeichnet,** daß der induktive Sensor (7) magnetisch an den Rotor des Motors auf eine indirekte Weise durch einen permanentmagnetischen Hilfsrotor gekoppelt ist, der an der Rotationsachse (10) des Rotors (1) aufgepaßt ist und außerhalb des magnetischen Felds des Stators angeordnet ist.

3. Elektronisch kommutierter Motor nach Anspruch 1, bei dem mögliche Störungs- und/oder Fehlersignale erzeugt werden, **dadurch gekennzeichnet,** daß die elektronische Kommutationsschaltung (3) durch die Summe des Antriebssignals (Ui), das durch den induktiven Sensor (7) produziert wird, und ein alternierendes Signal, das durch einen Hilfsgenerator (13) mit einer Amplitude produziert wird, die gerade etwas größer als die des Störungs- und/oder Fehlersignals ist, angetrieben ist.

4. Elektronisch kommutierter Motor nach Anspruch 3, **dadurch gekennzeichnet,** daß das alternierende Signal durch den Hilfsgenerator (13) mit einer Frequenz produziert wird, die im wesentlichen gleich der natürlichen Frequenz des elektromechanischen Systems ist, das den Motor und eine damit verbundene angetriebene Last umfaßt.

5. Elektronisch kommutierter Motor nach Anspruch 1, **dadurch gekennzeichnet,** daß die elektronische Kommutationsschaltung (3) durch die Summe des Antriebssignals (Ui), das durch den induktiven Sensor (7) produziert wird, und ein alternierendes Signal (Uh), das mit einer konstanten Amplitude durch eine Sensoreinrichtung (16) produziert wird, die vorgesehen ist, um die absolute Position des Rotors (1) zu erfassen, angetrieben ist.

## Revendications

1. Moteur commuté électroniquement comprenant un rotor ferromagnétique ou à aimant permanent, de même qu'un stator bobiné comprenant au moins un enroulement de stator alimenté au moyen d'un circuit de commutation électronique selon un signal d'entraînement généré par des moyens de détecteur prévus pour détecter la position angulaire du rotor et comprenant une bobine inductive (7) qui est couplée magnétiquement au rotor (1), caractérisé en ce que lesdits moyens de détecteur sont agencés à sensiblement 90 degrés électriques par rapport à l'enroulement de stator (2 ; 21, 22), de sorte que ledit signal d'entraînement (Ui) est induit dans le détecteur (7) avec un décalage de phase correspondant par rapport à la tension (EMF) induite dans l'enroulement de stator.

2. Moteur commuté électroniquement selon la revendication 1, caractérisé en ce que ledit détecteur inductif (7) est couplé magnétiquement au rotor du moteur de manière indirecte au moyen d'un rotor auxiliaire à aimant permanent qui est ajusté sur l'axe de rotation (10) du rotor (1) et situé à l'extérieur du champ magnétique du stator.

3. Moteur commuté électroniquement selon la revendication 1, dans lequel des signaux parasites et/ou d'erreur possibles sont générés, caractérisé en ce que ledit circuit de commutation électronique (3) est actionné par la somme du signal d'entraînement (Ui) produit par le détecteur inductif (7) et un signal alternatif produit par un générateur auxiliaire (13) avec une amplitude qui est à peine supérieure à celle desdits signaux parasites et/ou d'erreur.

4. Moteur commuté électroniquement selon la revendication 3, caractérisé en ce que ledit signal alternatif est produit par le générateur auxiliaire (13) avec une fréquence qui est sensiblement la même que la fréquence naturelle du système électromécanique comprenant le moteur et une charge actionnée qui lui est associée.

5. Moteur commuté électroniquement selon la revendication 1, caractérisé en ce que ledit circuit de commutation électronique (3) est actionné par la somme du signal d'entraînement (Ui) produit par le détecteur inductif (7) et un signal alternatif (Uh) produit avec une amplitude constante par des moyens de détecteur (16) prévus pour détecter la position absolue du rotor (1).
